Europäisches Patentamt

European Patent Office

Office européen des brevets

(11) Publication number: **0 426 032 A2**

# EUROPEAN PATENT APPLICATION

(21) Application number: 90120594.8

(22) Date of filing: 26.10.90

(51) Int. Cl.5: **C09K 11/64**

(30) Priority: 30.10.89 JP 282556/89

(43) Date of publication of application:
08.05.91 Bulletin 91/19

(84) Designated Contracting States:
**DE FR GB**

(71) Applicant: SONY CORPORATION
7-35 Kitashinagawa 6-Chome Shinagawa-ku
Tokyo 141(JP)

(72) Inventor: **Abe, Tomohiko, c/o Sony
Corporation
7-35, Kitashinagawa 6-chome, Shinagawa-ku
Tokyo(JP)**
Inventor: **Kimizuka, Yuichi, c/o Sony
Corporation
7-35, Kitashinagawa 6-chome, Shinagawa-ku
Tokyo(JP)**
Inventor: **Okita, Masami, c/o Sony Corporation
7-35, Kitashinagawa 6-chome, Shinagawa-ku
Tokyo(JP)**
Inventor: **Ohno, Katsutoshi, c/o Sony
Corporation
7-35, Kitashinagawa 6-chome, Shinagawa-ku
Tokyo(JP)**

(74) Representative: **TER MEER - MÜLLER -
STEINMEISTER & PARTNER
Mauerkircherstrasse 45
W-8000 München 80(DE)**

(54) Process for preparing a ZnS fluorescent material.

(57) A process for preparing ZnS fluorescent particles which comprises the steps of providing an aqueous solution contain ZnS, $CuSO_4$, $Al_2(SO_4)_3$ and CsCl with a molar ratio of the CsCl to ZnS being in a range of $1 \times 10^{-3}$ to 1, and then evaporating the aqueous solution to dryness to form a solid matter. The resultant solid matter is fired, after which any remaining CsCl is removed from the fired product by washing with water.

EP 0 426 032 A2

# PROCESS FOR PREPARING A ZNS FLUORESCENT MATERIAL

## BACKGROUND OF THE INVENTION

### Field of the Invention

This invention relates to the preparation of ZnS fluorescent material which is utilized as a fluorescent face for cathode ray tubes and, more particularly, to a process for preparing a ZnS fluorescent material having a small particle size and a high luminance when applied as the fluorescent face.

### Description of the Prior Art

As is well known in the art, when ZnS is activated with a metal element such as silver, copper, aluminum or the like, it becomes a blue or green fluorescent material which is hereinafter referred to as ZnS fluorescent material or materials. In particular, a fluorescent material of ZnS:Cu, Al, which is obtained by activation with both copper and aluminum, is only one green fluorescent material exhibiting a high luminance by irradiation with an electron beam and is utilized as a fluorescent for the cathode ray tubes.

In general, when fluorescent materials are low in crystallinity, a satisfactory luminance cannot be expected. Accordingly, it is common to add fluxes which are used as a promoter for growth of the crystal particles. In the process of the preparation of the ZnS fluorescent materials, fluxes are inevitably used. Alkali metal or alkaline earth metal halides, zinc halides, ammonium halides and the like have been widely used for these fluxes. The type and amount of flux and firing conditions greatly influence the resultant fluorescent material with respect to the crystallinity, particle size and crystal form and, thus, will provide an influence on the brightness on the fluorescent face. Hence, extensive studies have been heretofore made on the fluxes.

For instance in Japanese Laid-Open Patent Application No. 55-149376, there is described a technique for the preparation of a ZnS fluorescent material by subjecting a starting material composed mainly of basic $ZnSO_4$ containing an activator to a two-stage thermal treatment, wherein an alkali metal and/or an alkaline earth metal acts on the $ZnSO_4$ at a molar ratio of $1 \times 10^{-3}$ to 2 moles per mole of $ZnSO_4$ at one of the two stages. In this published application, examples are described dealing with various halides, sulfides and carbonates used as a source fo the alkali metal. In one such example, it is stated that a $3 \times 10^{-2}$ moles of CsCl per mole of $ZnSO_4$ is used. The ZnS fluorescent material obtained by this technique has a form of a plate-like particle. It is stated that when such plate-like particles are fully applied over the fluorescent face, optical scattering and absorption within a pattern of the fluorescent material become smaller than in the case using spherical particles. This will result in an increase of light transmittance, with an improvement in the brightness on the fluorescent face.

In recent years, cathode ray tubes of the type which has a fine fluorescent pattern, e.g. a high precision vision or the like, have been developed. In order to achieve a high degree of resolution, a high quality of picture and a high luminance, the size of fluorescent particles used should be as fine as approximately $2-3\mu m$. In this connection, the plate-like ZnS fluorescent particles prepared according to the technique disclosed in the Japanese Laid-Open Patent Application No. 55-149376 has a size as large as 20 to 60 $\mu m$. Thus, it will be apparent that these particles are not adapted for use as a fine pattern. In this publication, the problem involved in the use of spherical fluorescent particles is stated as a relatively poor brightness on the fluorescent face, but this can be readily solved when using a small-sized fluorescent particles by which the packing density of the fluorescent particles per unit volume is increased.

Accordingly, fluorescent particles which are spherical in form and small in size will be necessary in order to fabricate the fluorescent face of cathode ray tubes. Such particles should have well-balanced crystallinity and particule size. In general, as the amount of fluxes increases, the average size of the resultant crystal particles increases. In order to balance the crystallinity and the particle size in the prior art, it is usual that the amount of the flux is appropriately selected while taking into account how to balance these characteristics. However, such a selection makes it substantially difficult to obtain fluorescent particles with a size smaller than fluorescent particles prepared without the addition of any flux. It may occur that after preparation of fluorescent particles with a relatively large average size, fine particles with a size of approximately 2 to 3 $\mu m$ are collected by classification. However, the classification is complicated and has a lowering in the yield of the fluorescent material and, thus, classification is not favorable from the standpoint of productivity and economy.

## SUMMARY OF THE INVENTION

It is an object of the invention to provide a simple process for preparing ZnS fluorescent particles having a high luminance and a small size.

It is another object of the invention to provide a simple process for preparing ZnS fluorescent particles which are particularly for use as a fluorescent face of projector-type cathode ray tubes and cathode ray tubes for view finders of video cameras which require a high resolution and a high precision.

We found that among a number of fluxes which are considered for increasing the particle size of fluorescent materials with an increase in amount of the fluxes, some could reduce the particle size when added in amounts exceeding a certain level. Moreover, CsCl has not only such an effect as mentioned above, but also does not invite any lowering of chromaticity and, thus, is very useful flux.

According to the invention, there is provided a process for preparing ZnS fluorescent particles which is characterized by evaporating to dryness an aqueous solution contain ZnS, $CuSO_4$, $Al_2(SO_4)_3$ and CsCl, which is used at a molar ratio of CsCl to ZnS in a range of $1 \times 10^{-3}$ to 1, firing the resultant solid matter, and removing any remaining CsCl by washing with water.

## BRIEF DESCRIPTION OF THE DRAWING

The Figure is a characteristic graph showing, in relation to the amount of CsCl, the variations in the size ratio and luminance ratio between ZnS fluorescent particles prepared according to the process of the invention and ZnS fluorescent particles obtained without the use of any CsCl.

## DETAILED DESCRIPTION OF THE PREFERRED EMBODIMENTS

In the process of the invention, a mixture of ZnS, which serves as a matrix substance of fluorescent particles, small amounts of sulfates, which are used as sources for activating elements of Cu and Al, and CsCl, which is used as a flux, is fired.

The amounts of the sulfates, which are used as sources for the activating elements, may be appropriately determined depending on a desired degree of chromaticity bit are within a range ordinarily applied in the field of the production of ZnS fluorescent materials. When defined by a molar ratio to ZnS, $CuSO_4$ is used in the range of $1 \times 10^{-5}$ to $1 \times 10^{-3}$ and $Al_2(SO_4)_3$ is used in the range of $1 \times 10^{-5}$ to $1 \times 10^{-2}$.

In the practice of the invention, it is important that CsCl be added as a flux at a ratio in the range of $1 \times 10^{-3}$ to 1 mole per mole of ZnS. If the amount is less than the above range, the size of the resultant fluorescent particles becomes large. On the contrary, when the amount is larger than the above range, the luminance tends to be lower.

In the present invention, the respective starting materials to form a solution are dissolved in water and this step of dissolving is followed by evaporation of the solution to dryness for mixing. This is because the amounts of $CuSO_4$, $Al_2(SO_4)_3$ and, in some case, CsCl are very small in relation to the amount of ZnS used as a matrix material and, thus, it is difficult to uniformly mix them by physical means such as milling.

The firing of the solide matter, which was obtained by the evaporation of the solution to dryness, is carried out at a temperature ranging from 850°C to 1200°C. At temperatures lower than 850°C, the luminance of the ZnS fluorescent material becomes poor due to the shortage of the activating elements being taken in, the presence of unreacted starting materials and the non-uniformity of the crystal structure. When the temperature is set at not lower than 1200°C, any appreciable change in the chemical reaction does not appear. In order to prevent a loss of the flux, it is preferred that the solid matter is not directly charged into an environment which is set from the beginning at the firing temperature defined above, but that the firing is effected by raising the temperature from room temperature at a constant rate to the firing temperature which is defined above and is maintained for a given period of time.

Sulfur in the staring materials is, more or less, lost in the form of $S)_3$ gas by air oxidation during the firing. Accordingly, it is preferred to add sulfur with a high purity in amount of up to 10 wt% to the solid matter prior to the firing. When the amount exceeds 10 wt%, any appreciable effect is not obtained.

So far as the above requirements are satisfied, the firing temperature is not critical. The firing time ordinarily used in the field of the production of ZnS fluorescent materials may be used and is appropriately in the range of about 2 to 10 hours.

CsCl remaining after the firing has a very high solubility in water and can be readily dissolved and removed by washing with water.

In the reaction system of preparing the ZnS fluorescent particles, the particle size of the ZnS fluorescent material depends on the amount of the CsCl used as a flux. According to a preliminary experiment made by use, the particle size becomes maximized when the molar ratio of CsCl to ZnS is approximately $1 \times 10^{-4}$. Conventionally, it

has been accepted that the particle size increases with an increase in amount of fluxes. In this connection, we have unexpectedly found that a maximum value is present in the variation of the particle size and that an increase in amount of CsCl results in a decrease in the particle size. Based on this finding, the amount is selected in a range where the luminance is not lowered, so that the ZnS fluorescent material with a small size and a high luminance can be readily prepared.

The process for preparing ZnS fluorescent particles according to the invention is more particularly described by way of an example.

## Example

Initially, commercially available, highly pure ZnS with a luminescence grade and particle size of 2 - 3 $\mu$m, $CuSO_4$ with a purity of 99.99%, and $Al_2(SO_4)_3 \cdot 17.4H_2O$ with a purity of 99.99% were weighted at molar ratios of $1:1.5\times10^{-5}:1.5\times10^{-5}$ and dissolved in pure water. After addition of CsCl in an amount ranging from $1 \times 10^{-3}$ to 1 mole per mole of ZnS to the aqueous solution, the solution was evaporated to dryness by the use of a rotary evaporator. The resultant solid matter was mixed with 10 wt% of sulfur having a purity of 99.999% and the mixture was placed in a quartz of aluminum crucible and covered with an inner cover. After the inner cover was placed on the crucible, approximately 25 wt% of active carbon based on the mixture was provided and an outer cover was placed. The active carbon was used to convert $O_2$ in air into $CO_2$ gas during firing, by which the content in the crucible was prevented from contacting $O_2$ and was not oxidized. The firing was effected by raising the temperature of the content at a rate of 200 °C per hour from room temperature to 900 °C, and the temperature of 900 °C was kept for four hours. After completion of the firing, the content was removed from the crucible and the remaining CsCl was removed by washing with water, followed by drying to obtain a powder of ZnS:Cu, Al. This was used as a sample for measurements of the size distribution and the luminance.

For comparison, a sample of ZnS:Cu, Al prepared in the same manner as described above without the addition of any CsCl (hereinafter referred to as CsCl-free sample) was provided.

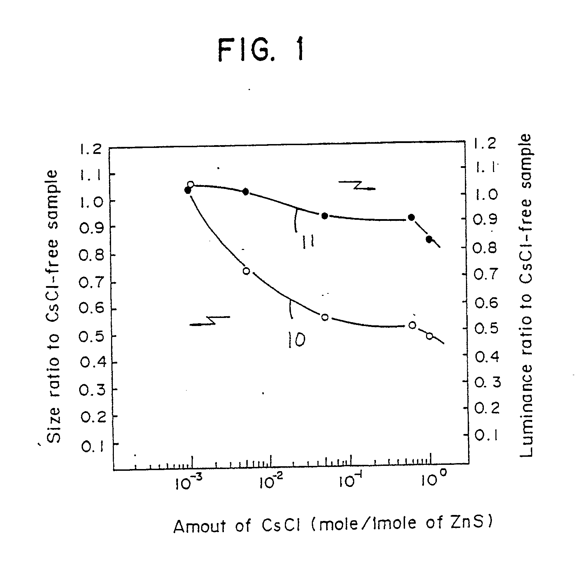

In Fig. 1, there are shown the results of the variations in the particle size (volume average size) and the luminance in relation to the amount of CsCl expressed as ratios to the respective values of the CsCl-free sample. In the Figure, the ordinate axis indicates a size ratio and a luminance ratio to the CsCl-free sample and the abscissa axis indicates an amount of CsCl (mole/mole of ZnS). The plot indicated by a circle (o), which forms a curve 10, and the plot indicated by a black circle (●), which forms a curve 11, are, respectively, the size ratio and the luminance ratio. When the amount of CsCl is $1 \times 10^{-3}$ mole per mole of ZnS, the size and the luminance are both almost the same as those of the CsCl-free sample. In this case, the particle size is in the range of about 4 -7 $\mu$m when observed through a microscope, which size is slightly larger than that of the CsCl-free sample. The luminance is slightly higher than that of the CsCl-free sample. As shown by the curve 10, the particle size decreases with an increase in the amount of CsCl. At an amount of CsCl of $5 \times 10^{-3}$ mole, the size is approximately 75% of the CsCl-free sample and the microscopic observation reveals that the particles are as fine as 2 to 3 $\mu$m, which is substantially the same as the size of the starting ZnS. As shown by the curve 11, the luminance is gradually lowered as the amount of CsCl per mole of ZnS increases. In the range of the amount of approximately $5 \times 10^{-3}$ or below, the luminance is higher than that of the CsCl-free sample. However, with an amount over $1 \times 10^{-2}$ mole, the value becomes lower than that of the CsCl-free sample.

As the amount of CsCl increases, the size of ZnS:Cu, Al decreases and the luminance also decreases. Accordingly, an optimum amount should be appropriately determined depending on desired characteristics. From the results of the above experiment, the amount of CsCl is preferably $5 \times 10^{-3}$ per mole of ZnS. Although the luminance at this amount is lower than a maximum luminance attainable for ZnS:Cu,Al, the volume average size is smaller. This enables one to pack, for example, a fluorescent pattern of a cathode ray tube panel at a high density, and to ensure a practically satisfactory luminance.

It will be noted that a smaller size for the starting ZnS makes it possible to obtain a smaller size of the resultant ZnS:Cu,Al.

As will be apparent from the above description, the amount of CsCl relative to ZnS is set in an optimum range in the process of the invention, so that there can be obtained ZnS fluorescent particles with a high purity and a small size by a simple procedure. The small-size fluorescent material has a number of advantages with respect to the quality, productivity and economy, including a reduction in surface irregularity on the fluorescent face with an attendant improvement in reflectivity of a metal back, a reduction in the number of defects such as pinholes, an improvement in the packing density of the fluorescent material with an attendant saving in the amount of the fluorescent material, an improvement in the adhesion force between the glass panel and the fluorescent pattern, a clear profile of the fluorescent pattern, and the like. Such ZnS fluorescent particles are very suitable for use as a fluorescent face of projection-type cathode ray tubes and cathode ray tubes for view finders of video cameras which require a high resolution and a high precision.

Although various minor modifications may be suggested by those versed in the art, it should be understood that we wish to embody within the scope of the patent granted hereon all such modifications as reasonably and properly come within the scope of our contribution to the art.

## Claims

1. A process for preparing ZnS fluorescent particles comprising the steps fo providing an aqueous solution containing ZnS, $CuSO_4$, $Al_2(SO_4)_3$ and CsCl, said CsCl being present in a molar ratio of CsCl to ZnS of a range of $1 \times 10^{-3}$ to 1; evaporating the aqueous solution to dryness to form a solid matter, firing the resultant solid matter, and removing any remaining CsCl by washing with water.

2. A process according to claim 1, wherein $CuSO_4$, is used at a molar ratio to ZnS of $1 \times 10^{-5}$ to $1 \times 10^{-3}$.

3. A process according to claim 1, wherein $Al_2(SO_4)_3$ is used at a molar ratio to ZnS of $1 \times 10^{-5}$ to $1 \times 10^{-2}$.

4. A process according to claim 1, wherein the firing is effected at a temperature in a range of from $850^{\circ}$ C to $1200^{\circ}$ C.

5. A process according to claim 1, wherein the firing is effected by heating the solid matter from room temperature to a final temperature at a constant heating rate.

6. A process according to claim 1, wherein sulfur is added to the solid matter prior to the firing in an amount of up to 10 wt% based on the solid matter.

7. A process according to claim 1, wherein the firing is effected for a period of between 2 to 10 hours.

# FIG. 1